# EUROPEAN PATENT SPECIFICATION

(11) **EP 2 960 126 B1**
(45) Date of publication and mention of the grant of the patent: **17.05.2017**
(21) Application number: 15170354.3
(22) Date of filing: 02.06.2015
(51) Int. Cl.: B60T 17/22, G01L 5/28, B60T 7/04, B60T 8/40

(54) **PEDAL FEEL TEST APPARATUS AND METHOD**
PEDALGEFÜHLTESTVORRICHTUNG UND VERFAHREN
APPAREIL DE TEST DE SENSATION DE PÉDALE ET PROCÉDÉ

(30) Priority: 02.06.2014 GB 201409708
(43) Date of publication of application: 30.12.2015
(73) Proprietor: Jaguar Land Rover Limited, Warwickshire CV3 4LF (GB)
(72) Inventor: Steward, Mr Daren, Coventry, Warwickshire CV3 4LF (GB); Button, Mr Ian, Coventry, Warwickshire CV3 4LF (GB)
(74) Representative: Holmes, Matthew William

(56) References cited:
- EP-A1- 2 088 439
- EP-A2- 0 320 666
- AU-A1- 2008 202 702
- DE-A1- 19 603 863
- GB-A- 1 284 498
- GB-A- 2 029 534
- GB-A- 2 470 251
- US-A- 3 602 042
- US-A- 3 602 043
- US-A- 3 899 916
- US-A- 4 024 756
- US-A1- 2008 169 699
- US-A1- 2010 280 724
- US-A1- 2013 304 313

## Description

### TECHNICAL FIELD

The present disclosure relates to a method of testing behaviour of a vehicle brake system; and a test apparatus for testing behaviour of a vehicle brake system. The present disclosure also relates to a measurement apparatus; and to a method of measuring pedal travel.

### BACKGROUND

It is common practice for a vehicle to utilise pedals as a control input. For example, a standard automobile utilises a brake pedal and an accelerator pedal (optionally also a clutch pedal for vehicles not including an automatic transmission). It will be appreciated that the control pedal represents an important aspect of the interface between the driver and the vehicle. The behaviour of the control pedal and the resulting dynamic behaviour of the vehicle affect the driver's perception of the vehicle controls; the interaction of these parameters is referred to herein as the "pedal feel". Those system features influencing the pedal feel can include the pedal travel (corresponding to the displacement of the pedal) and the pedal actuating force, referred to herein as the "pedal load", (over a selected part of its travel range or over its entire travel range). With respect to a brake pedal, the subjective perception of the generated braking force (the brake power output) as a function of pedal travel and pedal load is central to the brake pedal feel. In the case of a vehicle having a hydraulic brake system, the generated braking force is related to the hydraulic system pressure. Due its subjective nature, it can prove difficult to quantify the pedal feel. Moreover, testing responses to actuation of the brake pedal can prove time consuming, which is undesirable in a manufacturing environment.

EP2088439, US3602042, EP0320666 and US2013/304313 relate to a methods and devices for testing braking systems in vehicles.

At least in certain embodiments, aspects of the present invention set out to overcome or ameliorate at least some of the shortcomings associated with prior art methods and apparatus for assessing brake pedal feel.

### SUMMARY OF THE INVENTION

Aspects of the present invention relate to a method of testing behaviour of a vehicle brake system; and a test apparatus for testing behaviour of a vehicle brake system. Aspects of the present invention also relate to a measurement apparatus; and to a method of measuring pedal travel.

According to a further aspect of the present invention there is provided a method of testing behaviour of a vehicle brake system in dependence on operation of a brake pedal coupled to a hydraulic system, the method comprising:
identifying the vehicle to be tested;
retrieving one or more predefined metrics for the identified vehicle;
displaying a first graphical indicator on a display screen to indicate a target brake pedal travel or a target brake pedal load;
displaying a second graphical indicator on the display screen to represent a measured brake pedal travel or a measured brake pedal load,
displacing the brake pedal at least substantially to match the measured brake pedal travel to the target brake pedal travel or to match the measured brake pedal load to the target brake pedal load;
wherein a hydraulic system pressure is monitored as the brake pedal is displaced to determine if the vehicle brake system satisfies said retrieved one or more predefined metrics. By monitoring the hydraulic system pressure in relation to the brake pedal travel or the brake pedal load, the brake pedal feel can be assessed. The display of the target brake pedal travel or the target brake pedal load provides a graphical indication of the appropriate brake pedal travel or brake pedal load to perform the test. The display of the measured brake pedal travel or the measured brake pedal load facilitates actuation of the brake pedal at least substantially to match the corresponding brake pedal travel or brake pedal load. The method thereby provides a technique for guiding a user to control depression and/or release of the brake pedal. By monitoring the hydraulic system pressure as the brake pedal is displaced, the behaviour of the vehicle brake system in dependence on operation of the brake pedal (in terms of travel or load) can be determined. The method can be used to check consistency in the behaviour of the vehicle brake system, for example during vehicle assembly.

The hydraulic system pressure and/or the brake pedal travel and/or the brake pedal load can be compared to one or more predefined thresholds to quantify behaviour of the brake pedal system. A 2-dimensional or 3-dimensional array could be used to store the measured data for comparison with said one or more predefined metrics.

The brake pedal travel can be measured by one or more position transducers. For example, the brake pedal travel could be determined by position data output from a linear position transducer and an angular position data. The brake pedal load (i.e. the load applied to the pedal) can be measured by a load cell transducer coupled to the brake pedal. The load cell transducer can operatively be mounted to the brake pedal to measure the load applied to the brake pedal.

The hydraulic system pressure is measured by a pressure sensor. The hydraulic system pressure could be measured directly, for example by coupling a pressure sensor to the hydraulic system. Alternatively, the hydraulic system pressure can be derived from a pressure sensor forming part of the vehicle system. For example, the hydraulic system pressure can be obtained from one or more pressure sensors provided in an antilock brake system (ABS). The hydraulic system pressure can be read from a vehicle communication network. The vehicle communication network can be coupled to the ABS. At least in certain embodiments, the hydraulic system pressure can be determined and output to the display screen substantially in real time.

The term metric used herein refers to a standardised set of one or more rules for quantifying the behaviour of the vehicle brake system. The predefined rules typically relate to the hydraulic system pressure in combination with the brake pedal travel or the pedal load. The determination that the vehicle brake system satisfies said one or more predefined metrics can comprise comparing the measured data to one or more thresholds. For example, an upper threshold and/or a lower threshold could be defined. Alternatively, or in addition, a target value can be predefined, optionally with a predefined variance range (positive/negative).

The predefined metrics can include one or more of the following:
the measured travel of the brake pedal corresponding to a first hydraulic system pressure;
an increase in the hydraulic system pressure corresponding to the measured travel of the brake pedal between a first pedal position and a second pedal position;
the measured pedal travel corresponding to an increase from a third hydraulic system pressure to a fourth hydraulic system pressure;
the measured pedal force corresponding to a fifth hydraulic system pressure; and
the measured pedal travel corresponding to a sixth hydraulic system pressure. Furthermore, a metric could be based on a change in the measured pedal load to achieve a predefined brake pedal travel.

The method can comprise increasing the target brake pedal load or pedal travel displayed on the display screen with respect to time. The target brake pedal load or pedal travel can increase at a uniform rate. The resulting increase in the hydraulic system pressure can be non-uniform. In an alternative embodiment, the target brake pedal load or pedal travel can increase at a non-uniform rate.

According to a further aspect of the present invention, the method can comprise identifying the vehicle to be tested.

The method can comprise repeating the test a plurality of times. An average of a particular measurement can be taken for each of the plurality of tests. The average can be used to check that the measured data is within the predefined thresholds. The method can comprise determining that the brake pedal feel complies with said one or more metrics based on the average of the measured data generated during said plurality of tests. For example, an average hydraulics system pressure or an average pedal travel could be determined for the plurality of tests. The average measurement for said plurality of tests can then be compared to the one or more thresholds associated with each metric.
According to a further aspect of the present invention there is provided a test apparatus for testing behaviour of a vehicle brake system in dependence on operation of a brake pedal, the test apparatus comprising:
a processor configured to:
   identify the vehicle to be tested;
   retrieve one or more predefined metrics for the identified vehicle;
   receive position data from at least one position transducer to determine a brake pedal travel or receive pedal load data from at least one load cell transducer to determine a brake pedal load;
   output a first signal to a display screen to display a first graphical indicator representing a target brake pedal travel or a target brake pedal load;
   output a second signal to the display screen to display a second graphical indicator representing the determined brake pedal travel or the determined brake pedal load;
receive hydraulic system pressure data from a hydraulic pressure sensor and, based on the received hydraulic system pressure data, determine if the vehicle brake system satisfies said retrieved one or more predefined metrics. In use, the hydraulic pressure sensor measures the hydraulic pressure in a hydraulic brake system provided in the vehicle brake system. The processor is configured to receive the hydraulic system pressure data as the brake pedal is displaced. The processor can thereby correlate the hydraulic pressure with the brake pedal travel or the pedal load data as the brake pedal is displaced. The processor can determine if the vehicle brake system satisfies the predefined metric(s).

The at least one position transducer can be incorporated into the test apparatus to measure the brake pedal travel. The at least one load cell transducer can be incorporated into the test apparatus to measure the load applied to the brake pedal.

The processor can be configured to determine a pressure in a hydraulic system pressure coupled to the vehicle brake pedal. The processor can be configured to use the hydraulic system pressure to check that the brake pedal feel complies with said one or more predefined metrics.

The hydraulics pressure sensor is in fluid communication with the hydraulic brake system. The hydraulic pressure sensor can be configured to output said hydraulic system pressure data substantially in real time. The hydraulic pressure sensor could be incorporated into the test apparatus. Alternatively, the test apparatus can comprise means for coupling the processor to a vehicle communication network. The coupling means can comprise a serial connection or could be a wireless connection, for example using the Bluetooth® communication protocol. The processor can be configured to read hydraulic system pressure data from the vehicle communication network. The vehicle communication network can be coupled to an antilock brake system (ABS) provided in the vehicle. The ABS can comprise one or more pressure sensors for measuring the hydraulic system pressure. The processor can be configured to determine the hydraulic system pressure using the data output from said one or more pressure sensors.

In certain applications, the vehicle can comprise means for tracking the brake pedal position. In these cases, the processor can be configured to read brake pedal travel data from the vehicle communication network.

The term metric used herein refers to a standardised set of one or more rules for quantifying the behaviour of the vehicle brake system. The predefined rules typically relate to the hydraulic system pressure in combination with the brake pedal travel or the pedal load. The check that the vehicle brake system satisfies one or more predefined metrics can comprise comparing the measured data to one or more thresholds associated with each predefined metric. For example, an upper threshold and/or a lower threshold could be defined. Alternatively, or in addition, a target value can be predefined, optionally with a predefined variance range (positive/negative).

The predefined metrics can include one or more of the following:
the measured travel of the brake pedal corresponding to a first hydraulic system pressure;
an increase in the hydraulic system pressure corresponding to the measured travel of the brake pedal between a first pedal position and a second pedal position;
the measured pedal travel corresponding to an increase from a third hydraulic system pressure to a fourth hydraulic system pressure;
the measured pedal force corresponding to a fifth hydraulic system pressure; and
the measured pedal travel corresponding to a sixth hydraulic system pressure. Furthermore, a metric could be based on the measured pedal load required to achieve a predefined brake pedal travel.

The processor can be configured to control the display of the target brake pedal load or pedal travel on the display screen to increase with respect to time. The processor can be configured to increase the target brake pedal load or pedal travel at a uniform rate.

The first graphical indicator can be in the form of a first gauge, for example a linear gauge or a rotary gauge. The first graphical indicator can be in the form of a first extending bar. The second graphical indicator can be in the form of a second gauge, for example a linear gauge or a rotary gauge. The second graphical indicator can be in the form of a second extending bar. The first and second graphical indicators can be displayed adjacent to each other on said display screen to facilitate comparison between the target and measured brake pedal loads or brake pedal travels. For example, first and second extending bars can be displayed parallel to each other and arranged to extend from a common reference axis or origin.

The processor can be configured to repeat the test a plurality of times. The processor can determine an average of a particular measurement for each of the plurality of tests. The average can be used to check that the measured data is within the predefined thresholds. The processor can determine whether the vehicle brake system satisfies said one or more metrics based on the average of the measurement data generated during said plurality of tests. For example, an average hydraulic system pressure at a particular pedal force or an average pedal travel at a particular hydraulic system pressure could be determined for the plurality of tests. The average measurement for said plurality of tests can then be compared to the one or more thresholds associated with each metric.

The test apparatus can comprise a means for identifying the vehicle to be tested. The identifying means can thereby enable vehicle specifications to be determined and optionally also retrieval of test parameters for the determined vehicle specification. The identifying means can be a scanner, such as a barcode scanner, for reading a code associated with the vehicle. Alternatively, the identifying means can comprise a wireless communication device, for example to communicate with a radio frequency identification (RFID) chip provided in the vehicle.

The identifying means may access the vehicle communication network, for example the identifying means may access a Controller Area Network (CAN) bus or a FlexRay(RTM) bus, for example using a physical connection device or a wireless connection device.

The test apparatus can comprise system memory including computer program code, wherein the system memory and the computer program code are configured, with the processor, to cause the test apparatus to implement the method(s) described herein.

The processor described herein is apparatus and can comprise one or more electronic processors. Similarly, the system memory can comprise one or more memory devices coupled to the processor. The processor can be a general purpose processor which is caused to perform the method(s) described herein when computer program code is implemented.

According to a further aspect of the present invention there is provided a measurement apparatus for measuring pedal travel in a vehicle, the measurement apparatus comprising:
a pedal mounting assembly for mounting the apparatus to the pedal;
a steering wheel mounting assembly for mounting the apparatus to a steering wheel of the vehicle or another fixed position; and
at least one position transducer for measuring travel of the pedal relative to its start position by measuring the displacement to the steering wheel or another fixed position. The use of the steering wheel as a stabiliser facilitates installation of the measurement apparatus. For example, this is perhaps more straightforward than the use of the seat structure or mounting assembly. The measurement apparatus could be used to measure pedal travel on one or more of the following types of pedal: a brake pedal, a clutch pedal and an accelerator pedal.

The at least one position transducer can comprise a linear position transducer for measuring linear travel; and/or an angular position transducer for measuring angular rotation. The angular position transducer can be configured to measure angular rotation resulting from non-linear travel of the pedal, since travel is typically due to a pivoting motion.

The measurement apparatus can comprise a load cell transducer for measuring a load applied to the pedal.

According to a further aspect of the present invention there is provided a method of using the measurement apparatus described herein to measure pedal travel in a vehicle. The method can comprise mounting the pedal mounting assembly to the pedal and mounting the steering wheel mounting assembly to the steering wheel. The method can comprise depressing the pedal and determining the pedal travel based on the output from said linear position transducer and/or said angular position transducer.

Within the scope of the claims it is expressly intended that the various aspects, embodiments, examples and alternatives set out in the preceding paragraphs, and/or in the following description and drawings, and in particular the individual features thereof, may be taken independently or in any combination. Features described in connection with one embodiment are applicable to all embodiments, unless such features are incompatible.

### BRIEF DESCRIPTION OF THE DRAWINGS

One or more embodiments of the present invention will now be described, by way of example only, with reference to the accompanying Figures, in which:
Figure 1 shows a schematic representation of test apparatus in accordance with an embodiment of the present invention;
Figure 2A shows a side elevation of a pedal measurement apparatus;
Figure 2B shows a front elevation of a pedal measurement apparatus;
Figure 3 shows a perspective view of a position transducer of the pedal measurement apparatus shown in Figures 2A and 2B;
Figure 4A shows a pedal load transducer disposed at a lower end of the pedal measurement apparatus shown in Figures 2A and 2B;
Figure 4B shows an image of a steering wheel mounting bracket disposed at an upper end of the pedal measurement apparatus shown in Figures 2A and 2B;
Figure 5 shows a side elevation of the controller for the test apparatus shown in Figure 1;
Figure 6A shows a first display image for output to a display screen;
Figure 6B shows a second display image for output to a display screen;
Figure 6C shows a third display image for output to a display screen;
Figure 6D shows a fourth display image for output to a display screen;
Figure 6E shows a fifth display image for output to a display screen;
Figure 6F shows a sixth display image for output to a display screen;
Figure 6G shows a seventh display image for output to a display screen;
Figure 6H shows an eighth display image for output to a display screen;
Figure 6I shows a ninth display image for output to a display screen;
Figure 6J shows a tenth display image for output to a display screen;
Figure 6K shows an eleventh display image for output to a display screen;
Figure 6L shows a twelfth display image for output to a display screen;
Figure 6M shows a thirteenth display image for output to a display screen;
Figure 6N shows a fourteenth display image for output to a display screen;
Figure 6O shows a fifteenth display image for output to a display screen;
Figure 6P shows a sixteenth display image for output to a display screen;
Figure 6Q shows a seventeenth display image for output to a display screen;
Figure 7A shows a first sample screen image output during a brake pedal test;
Figure 7B shows a second sample screen image output during a brake pedal test;
Figure 7C shows a third sample screen image output during a brake pedal test;
Figure 7D shows a fourth sample screen image output during a brake pedal test;
Figure 7E shows a fifth sample screen image output during a brake pedal test;
Figure 7F shows a sixth sample screen image output during a brake pedal test;
Figure 7G shows a seventh sample screen image output during a brake pedal test;
Figure 7H shows an eighth sample screen image output during a brake pedal test;
Figure 7I shows a ninth sample screen image output during a brake pedal test; and
Figure 7J shows a tenth sample screen image output during a brake pedal test;

### DETAILED DESCRIPTION

A test apparatus 1 for performing a brake pedal conditioning test and a brake pedal feel test on a brake pedal P in a vehicle (not shown) in accordance with an embodiment of the present invention is described herein with reference to the accompanying Figures. The test apparatus 1 can perform the brake pedal feel test during the application and/or release of the brake pedal P. In the present embodiment, the brake pedal P is coupled to a hydraulic braking system (not shown) to control application of friction brakes to control acceleration/deceleration of the vehicle.

The brake pedal feel test described herein is a static test performed when the vehicle is stationary, for example at the end of a vehicle production line. The brake pedal feel test is intended to quantify one or more of the following: pedal travel, pedal force and hydraulic system pressure generated by application of the brake pedal P. By quantifying each parameter, a check can be performed to ensure that the operation of the brake pedal is within predefined tolerances. The vehicle is typically an automobile, but the test apparatus 1 could be used for other classes of vehicle, such as an off-road vehicle, a truck, a heavy goods vehicle and so on.

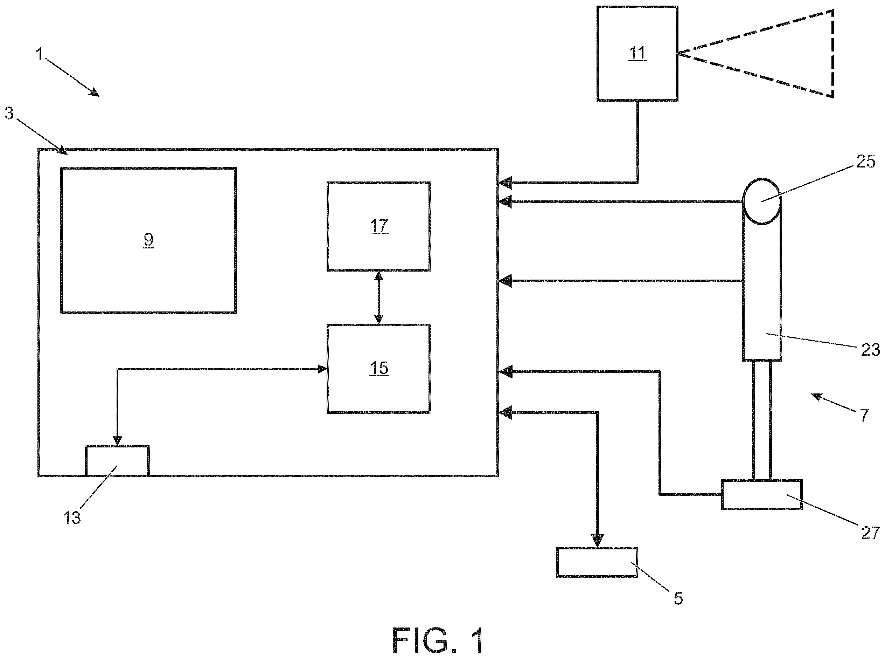

A schematic representation of the test apparatus 1 is shown in Figure 1. The test apparatus 1 comprises a controller 3, a serial connector 5, a pedal measurement apparatus 7, a display screen 9, a barcode reader 11. The controller 3 comprises a port 13 for connecting external memory to the controller 3, for example to connect a Secure Digital (SD) memory card. The controller 3 comprises a central processing unit (CPU) 15 comprising one or more electronic processors connected to system memory 17. The CPU 15 is a general purpose processing unit configured to implement a series of computer code instructions stored in the system memory 17. In the present embodiment, the display screen 9 is a touch screen to facilitate user input. The controller 3 can optionally also comprise an input/output port 13, such as a Universal Serial Bus (USB) port, to connect an input device, such as a keyboard or mouse.

The controller 3 is adapted to communicate with to a vehicle communication network to obtain data from one or more on-board sensors. The vehicle communication network can, for example, be a CAN bus or a FlexRay(RTM) bus. The data from the sensor(s) is published to the vehicle communication network and can be accessed at least substantially in real time by the controller 3. The serial connector 5 is configured to be connected to a vehicle diagnostic port (not shown) to establish communication between the CPU 15 and the vehicle communication network. In the present embodiment, the controller 3 is configured to access hydraulic system pressure data generated by a brake pressure sensor disposed in an antilock brake system (ABS). The hydraulic brake pressure data is generated by the brake pressure sensor in real-time and published to the vehicle communication network. The controller 3 can thereby access the hydraulic system pressure (bar) in real-time.

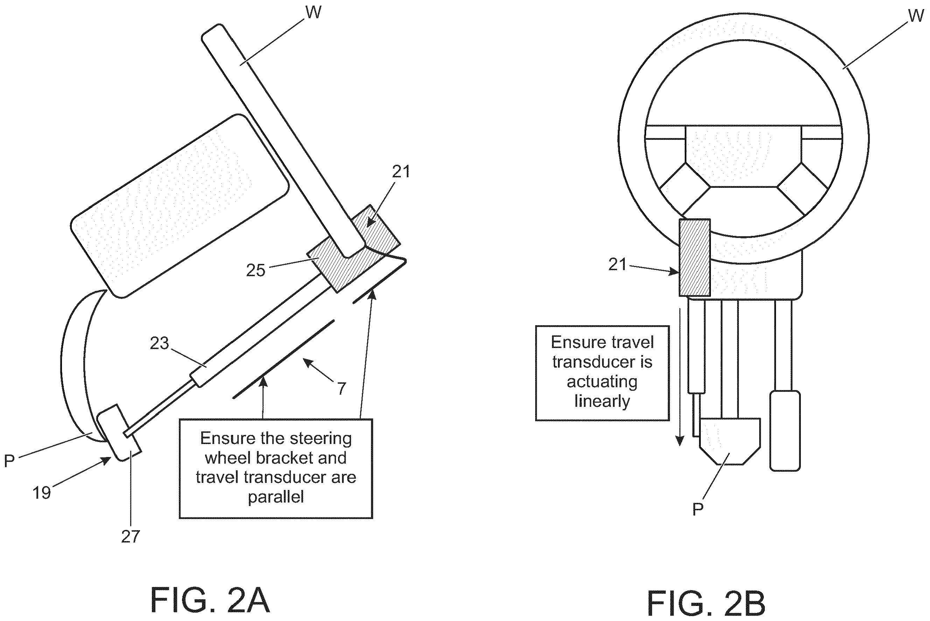

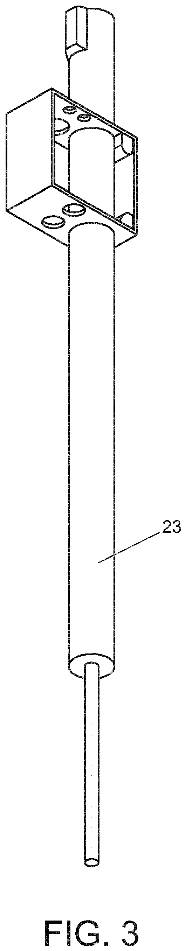

The pedal measurement apparatus 7 comprises a pedal mounting assembly 19 and a steering wheel mounting assembly 21. The pedal measurement apparatus 7 comprises a linear position transducer 23, an angular position transducer 25 and a load cell transducer 27 mounted to the pedal mounting assembly 19. As shown in Figures 2A and 2B, the pedal mounting assembly 19 is operatively mounted to the brake pedal P, and the steering wheel mounting assembly 21 is operatively mounted to a steering wheel W. The linear position transducer 23 and the angular position transducer 25 are configured to measure the travel position of the brake pedal P. The load cell transducer 27 is fixedly mounted to the brake pedal P and, in use, measures the actual pedal force (N) applied to the brake pedal P by the user. The steering wheel W provides an anchor (at least in a longitudinal direction) for fixedly locating the pedal measurement apparatus 7 to allow the travel of the brake pedal P to be measured accurately. A perspective view of the pedal measurement apparatus 7 is shown in Figure 3 with the pedal mounting assembly 19 and the steering wheel mounting assembly 21 omitted for clarity.

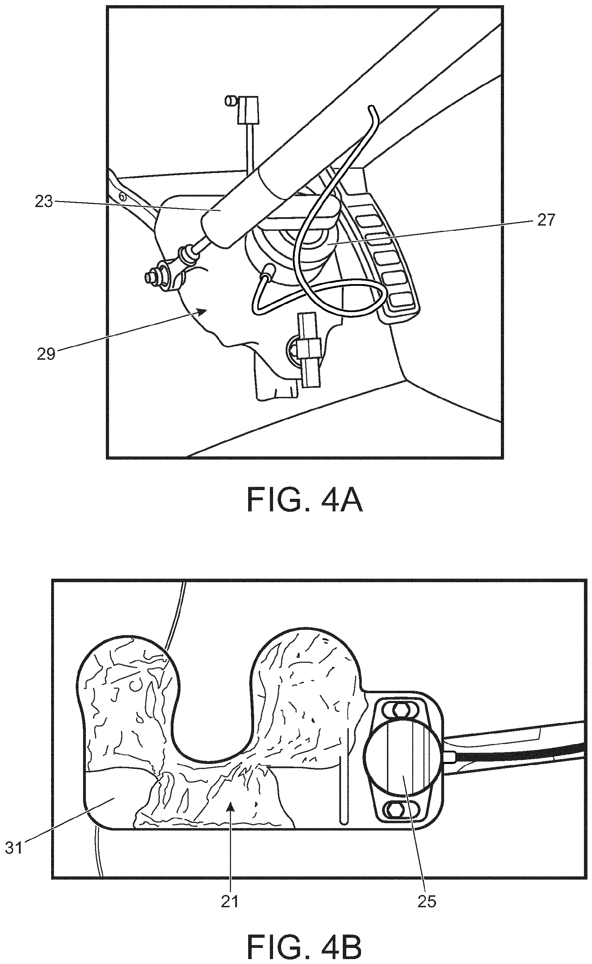

In the present embodiment, the pedal mounting assembly 19 comprises a pedal mounting bracket 29 for mounting to the brake pedal P. The steering wheel mounting assembly 21 comprises a wheel mounting bracket 31 for mounting to the steering wheel W and supporting the angular position transducer 25. The pedal mounting bracket 29 and the wheel mounting bracket 31 are formed using 3-dimensional printing techniques to match the profile of the pedal P and the steering wheel W respectively. The pedal mounting assembly 19 is shown in Figure 4A; and the steering wheel mounting assembly 21 is shown in Figure 4B.

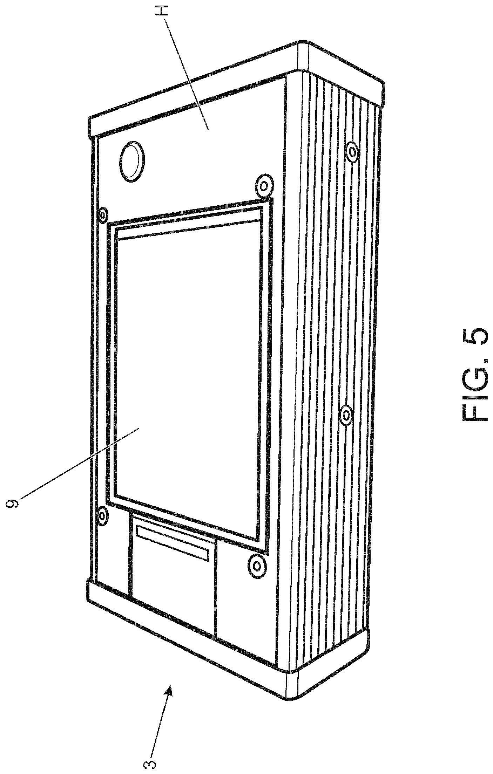

A perspective view of the test apparatus 1 is shown in Figure 5. The controller 3 and the display screen 9 are disposed in a housing H. The display screen 9 is mounted to an upper surface of the housing H to enable it to be viewed by a user during a test procedure. The controller 3 is configured to control the display screen 9 to display on-screen graphical prompts to the user to facilitate testing. The controller 3 comprises a connection port (not shown) for connecting the barcode reader 11. The barcode reader 11 is used to scan a vehicle barcode to determine a specification of the vehicle to be tested. The controller 3 can retrieve test parameters associated with a particular vehicle specification from a database stored in the system memory 17 (or on an external memory coupled to the controller 3).

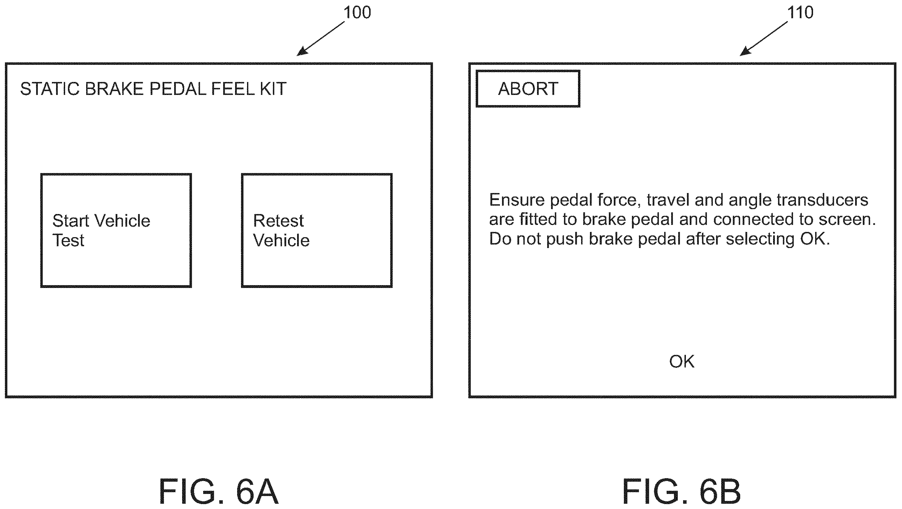

The controller 3 is configured to control the display screen 9 to display prompts to the user. The display images output to the display screen 9 during the test procedure will now be described with reference to Figures 6A-Q.

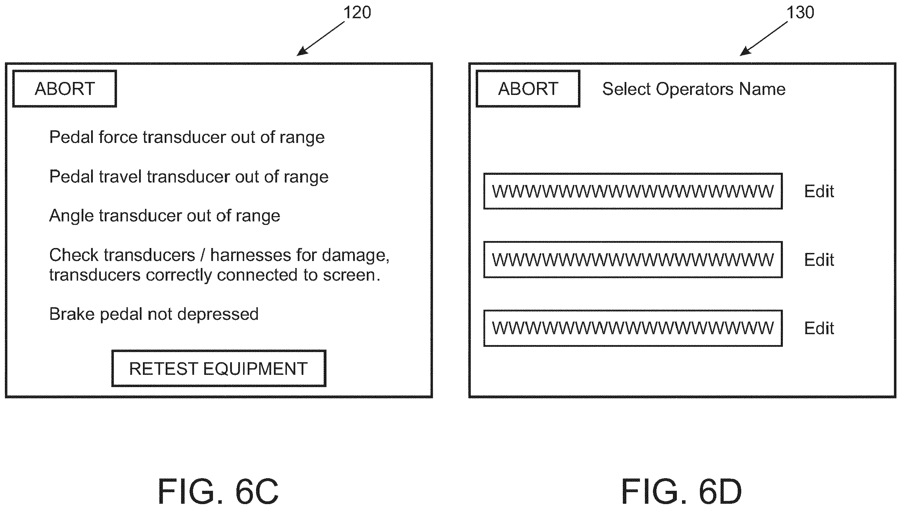

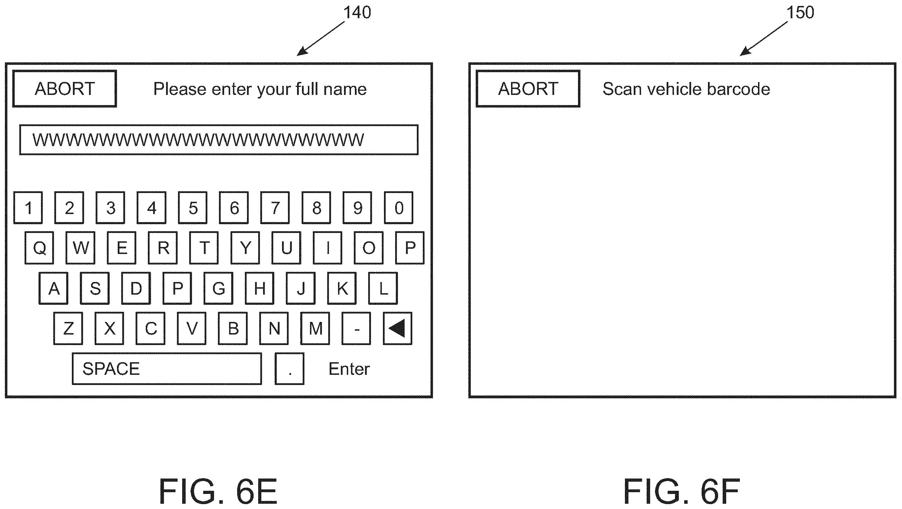

A first display image 100 is output to the display screen 9 to prompt the user to start a vehicle test or to retest a vehicle, as shown in Figure 6A. Once the user has selected the desired option, a second display image 110 prompts the user to ensure that the linear position transducer 23, the angular position transducer 25 and the load cell transducer 27 are fitted to the brake pedal P and connected to the controller 3, as shown in Figure 6B. The user confirms that the test apparatus 1 is correctly installed and a check is performed on the linear position transducer 23, the angular position transducer 25 and the load cell transducer 27. If the controller 3 identifies any faults in the test apparatus 1, a corresponding error message is displayed in a third display image 120, as shown in Figure 6C. The check can, for example, determine that one or more of the transducers are outside of a defined operating range. Alternatively, the check may determine that one or more of the transducers is not returning an expected signal, for example due to a damaged transducer or the connection to the controller 3. The user can abort the test at this stage or can repeat the check of the test apparatus 1. Once the controller 3 determines that the test apparatus 1 is functioning correctly, the user is prompted to select their name from a list displayed in a fourth display image 130, as shown in Figure 6D. If the user's name is not displayed in the list, the user can enter their name using an on-screen keyboard displayed in a fifth display image 140, as shown in Figure 6E.

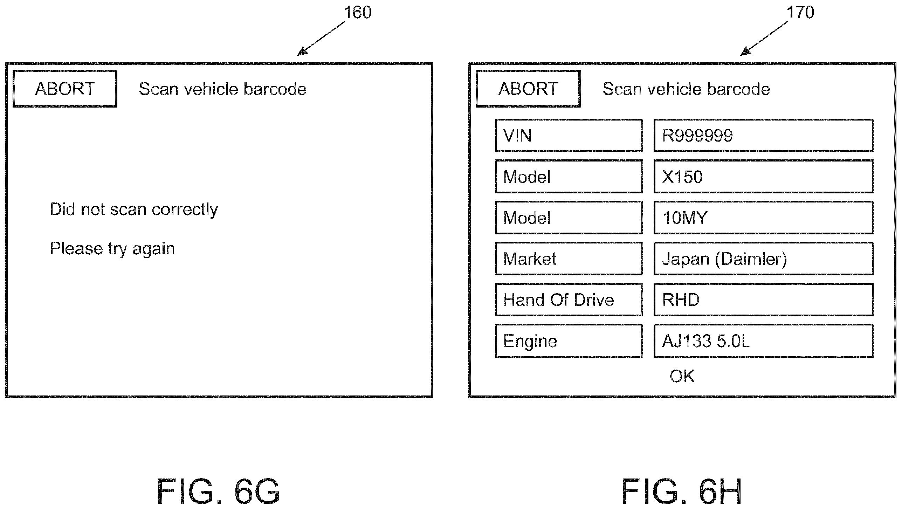

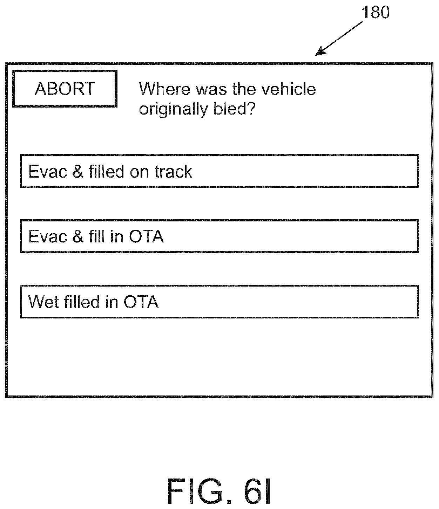

A sixth display image 150 is then output to the display screen 9 to prompt the user to scan the vehicle barcode using the barcode reader 11, as shown in Figure 6F. If the barcode is not scanned correctly, a seventh display image 160 prompts the user to repeat the scan, as shown in Figure 6G. Once the barcode has been scanned, the controller 3 retrieves data relating to the vehicle specification, including the vehicle identification number (VIN), the model, model year, market, and a drive and engine. The vehicle specification is displayed in an eighth display image 170 for checking by the user, as shown in Figure 6H. A ninth display image 180 is then output to the display screen 9 to prompt the user to indicate where the vehicle hydraulic system was bled, as shown in Figure 6I. The user can, for example, indicate that the system was: (1) evacuated and filled when the vehicle was on the production assembly track "On Track" (i.e. the vehicle is on the main production assembly line); (2) evacuated and filled when the vehicle was off the production assembly track "Off-Track Area (OTA)" (i.e. the vehicle is off the main production assembly line, for example to perform re-working); or (3) wet filled when the vehicle was off the production assembly track "Off-Track Area OTA".

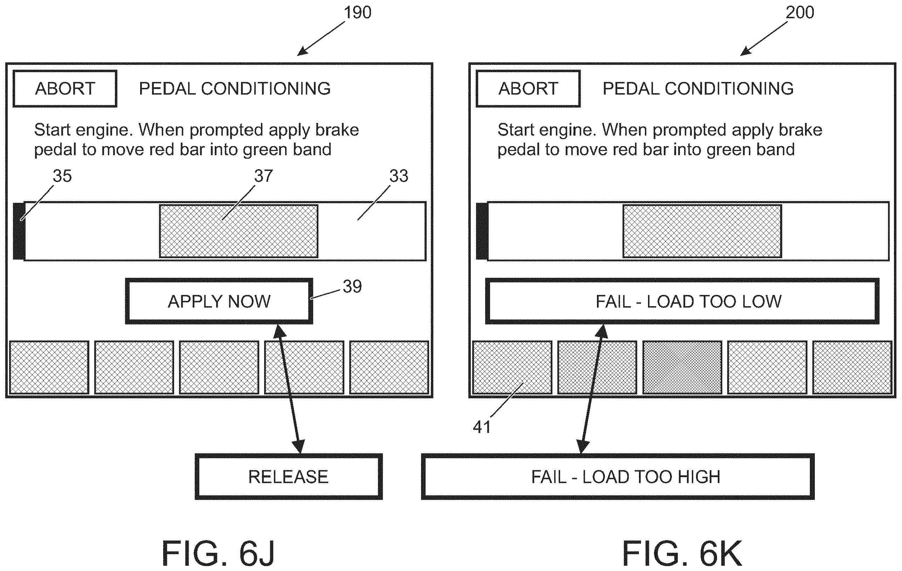

The user is then prompted to undertake the pedal conditioning test. As shown in Figure 6J, a tenth display image 190 is output to the display screen 9. The tenth display image 190 comprises a first set of graphical prompts to guide the user through the pedal conditioning test. The first set of graphical prompts comprises a first linear element 33 and a first indicator 35. The first indicator 35 is in the form of a fixed green band representing a target brake load region. A second indicator 37 is displayed to represent the load (N) measured by the load cell transducer 27. The second indicator 37 is overlaid onto the first linear element 33. In the present embodiment, the first indicator 35 is in the form of an extending bar which represents the measured load on the brake pedal P. The first linear element 33 could be in the form of a scale, for example comprising graduations. During the pedal conditioning test, the user is prompted to depress the brake pedal P to increase the measured (actual) brake load to achieve the target brake load represented by the first indicator 35. The controller 3 does not control the rate at which the brake load increases during the pedal conditioning test. The pedal conditioning test is performed to minimise variation in the pedal travel and force versus pressure characteristic with the actual test.

An on-screen instruction box 39 is displayed to output a first instruction (such as "APPLY NOW") to prompt the user to apply the brake pedal P; and a second instruction (such as "RELEASE") when the target brake load has been achieved. If the measured brake load is outside the target brake load region represented by the first indicator 35, a notification is displayed in the on-screen instruction box 39 to provide feedback to the user. As shown in Figure 6K, an eleventh display image 200 is displayed if the pedal conditioning test is unsuccessful, for example the message "FAIL - LOAD TOO LOW" is displayed if the measured brake load is less than the target brake load region, and the message "FAIL - LOAD TOO HIGH" is displayed if the measured brake load is greater than the target brake load region. The pedal conditioning test is repeated five (5) times. Each successful test is indicated on the eleventh display image 200 by changing the colour of a display box 41 to green whilst an unsuccessful test is indicated by changing the colour of the display box 41 to red.

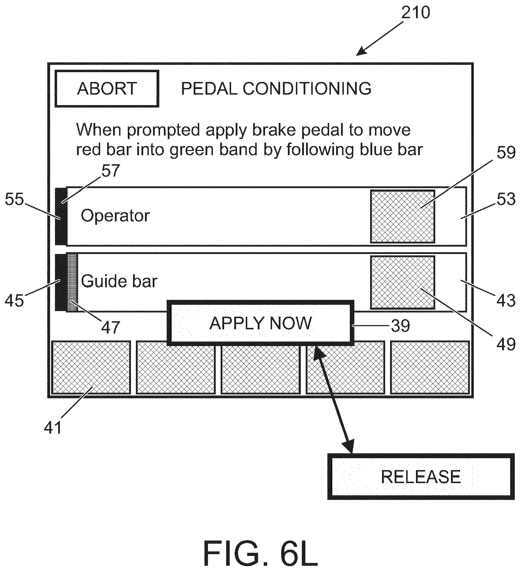

A twelfth display image 210 is output to the display screen 9 to prompt the user to start the brake pedal feel test, as shown in Figure 6L. The brake pedal feel test requires the brake to be applied at a controlled linear rate until a pre-determined load is reached. The twelfth display image 210 comprises a second set of graphical prompts to guide the user through the brake pedal feel test. In particular, the graphical prompts comprise a third linear element 43 and a third indicator 45. The third indicator 45 is in the form of a guide bar which extends relative to the third linear element 43 to represent a target brake load for the user to match. A first end 47 of the third indicator 45 represents a target brake load to be matched by the user operating the brake pedal P. The third indicator 45 extends at a uniform rate which corresponds to a constant brake apply rate (mm/s) which can be either positive or negative. The third indicator 45 is positioned initially to represent a brake load of 10N and then extends once the measured brake load applied by the user exceeds 10N. In the present embodiment, the third indicator 45 extends at a rate equivalent to an increase in the brake load of 10N/s and then returns to zero at the same rate. The on-screen instruction box 39 is displayed to output a first instruction (such as "APPLY NOW") to prompt the user to apply the brake pedal P. It will be appreciated that in variants, the third indicator 45 could travel at a non-uniform speed representing a non-linear brake application rate.

A target operating window is defined with reference to the target brake load. The target operating window comprises an upper operating threshold and a lower operating threshold.

The upper and lower operating thresholds could optionally be displayed on the third linear element 43. The third indicator 45 is coloured blue in the present embodiment to differentiate from the third linear element 43. A maximum test load is represented by a first maximum brake load marker 49 which is displayed on the third linear element 43 to indicate the maximum brake load to be achieved during a test. The first maximum brake load marker 49 is indicated by a green band in the present embodiment.

The twelfth display image 210 also comprises a graphical representation of the measured brake load implemented by the user during a test. In particular, the graphical representation comprises a fourth linear element 53 and a fourth indicator 55. The fourth linear element 53 is disposed parallel to and in alignment with the third linear element 43. The fourth indicator 55 is in the form of a measurement bar which extends to represent the current measured load on the brake pedal P. The measured brake load is derived from the load cell transducer 27 disposed on the pedal mounting assembly 19. A second end 57 of the fourth indicator 55 represents the actual (measured) brake load. The fourth indicator 55 thereby provides the user with an indication of the current brake load at least substantially in real time and allows the user to match the measured brake load to the target brake load represented by the third linear element 43. It will be appreciated that the fourth linear element 53 could be omitted by displaying the fourth indicator 55 on the third linear element 43. The fourth indicator 55 is coloured red in the present embodiment to differentiate from the fourth linear element 53. A maximum test load is represented by a second maximum brake load marker 59 which is displayed on the fourth linear element 53.

In use, the user depresses the brake pedal P such that the measured brake load represented by the fourth indicator 55 matches the target brake load represented by the third indicator 45. The measured brake load should remain within the defined operating range (i.e. between the upper and lower operating thresholds). In the context of the graphical output on the display screen 9, the user controls the depression of the brake pedal P such that the extension of the fourth indicator 55 at least substantially matches the extension of the third indicator 45. If the measured brake load is too large, the fourth indicator 55 extends beyond the third indicator 45 and the user is prompted to reduce the apply rate of the brake pedal P (i.e. to reduce the rate at which the brake pedal P is depressed). Conversely, if the measured brake load is too low, the fourth indicator 55 lags behind the third indicator 45 and the user is prompted to increase the apply rate of the brake pedal P (i.e. to increase the rate at which the brake pedal P is depressed). If the measured brake load rises above the upper operating threshold or falls below the lower operating threshold, the test cycle should be repeated.

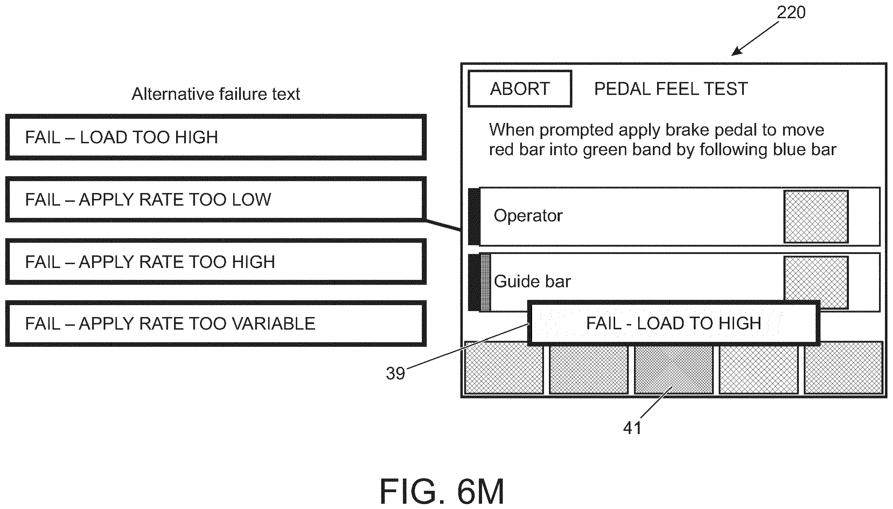

A thirteenth display image 220 is output to the display screen 9 if the controller 3 determines that that the measured brake load was outside acceptable parameters. As shown in Figure 6M, in dependence on the detected error, the controller 3 can output an appropriate fail message, such as: "FAIL - LOAD TOO LOW", "FAIL - LOAD TOO HIGH", "FAIL - APPLY RATE TOO LOW", "FAIL - APPLY RATE TOO HIGH" and "FAIL - APPLY RATE TOO VARIABLE". The brake pedal feel test comprises a plurality of test cycles (five in the present implementation) which must be completed successfully in order to complete the brake pedal feel test. The successful completion of each test cycle is indicated on the thirteenth display image 220 by changing the colour of a display box 41 to green whilst an unsuccessful test is indicated by changing the colour of the display box 41 to red.

The controller 3 records data generated by the linear position transducer 23, the angular position transducer 25 and the load cell transducer 27 during the brake pedal feel test. In particular, the controller 3 records position data from the linear position transducer 23 and the angular position transducer 25 to determine the travel of the brake pedal P. The controller 3 also records pedal load data from the load cell transducer 27 which represents the load applied to the brake pedal P. Moreover, the controller 3 communicates with the vehicle communication network to access the hydraulic system pressure data corresponding to the measured hydraulic system pressure. The controller 3 analyses the measured data to determine whether the brake pedal feel complies with one or more of the following metrics:
(M1) the brake pedal travel (mm) to achieve a first hydraulic system pressure (bar);
(M2) an increase in the hydraulic system pressure (bar) for brake pedal travel between a first brake pedal travel position and a second brake pedal travel position;
(M3) an increase in the brake pedal travel (mm) to achieve an increase from a third hydraulic system pressure to a fourth hydraulic system pressure;
(M4) an applied pedal force (N) to achieve a fifth hydraulic system pressure; and
(M5) a brake pedal travel (mm) to achieve a sixth hydraulic system pressure.

The hydraulic system pressures associated with each metric are predefined and can be calibrated for a particular vehicle and, indeed, vehicle specification. The controller 3 will determine the required brake pedal travel or applied pedal force for the corresponding metrics (M1-5) from the relevant data collected. The determined brake pedal travel or applied pedal force is stored in the memory.

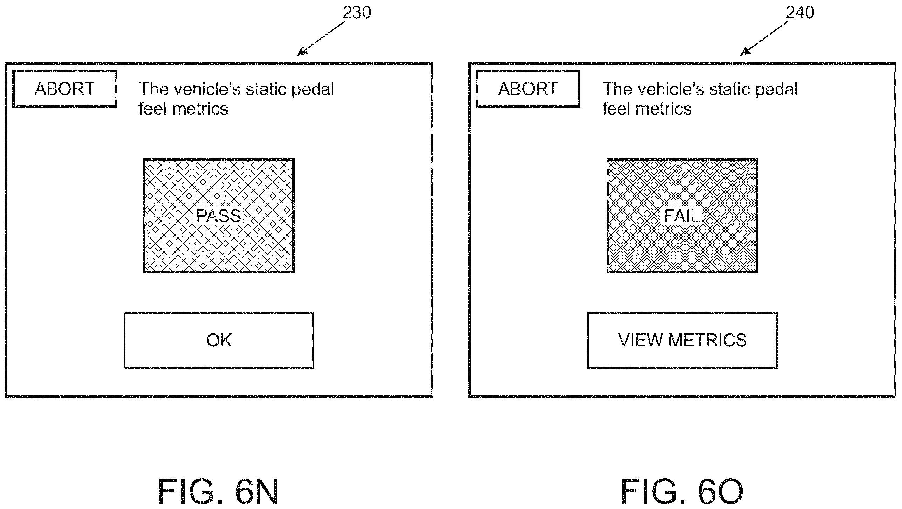

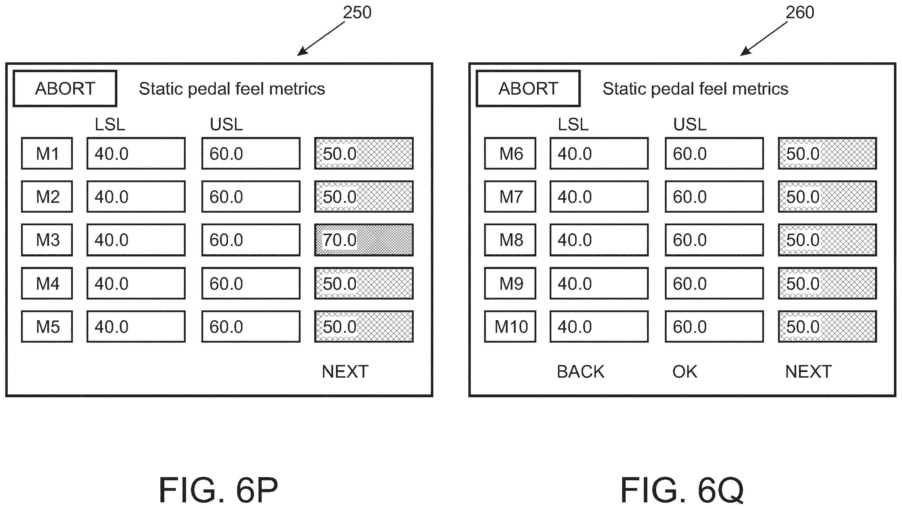

The CPU 15 is configured to analyse the measured parameters to determine whether the behaviour of the vehicle braking system complies with the intended brake pedal feel, as defined by the thresholds associated with each of the metrics (M1-M5). If the measured parameters are within the predefined thresholds, a fourteenth display screen 230 is displayed confirming that the vehicle has passed the static pedal feel metrics, as shown in Figure 6N. If the measured parameters fall outside the predefined thresholds, a fifteenth display screen 240 is displayed confirming that the vehicle has failed the static pedal feel metrics, as shown in Figure 6O. The user can select a "VIEW METRICS" prompt to review the metrics obtained during each performance of the brake pedal feel test. As shown in Figure 6P, a sixteenth display screen 250 sets out each of the metrics (M1-5) along with the associated Lower Specified Limit (LSL) and Upper Specified Limit (USL). The measured parameters are displayed for each metric. Any failing metrics (i.e. those falling outside the specified limits) are displayed in red and passing metrics (i.e. those falling within the specified limits) are displayed in green. By way of example, the sixteenth display screen 250 shows the third metric M3 having a measured value of 70 units which is outside the specified range of 40 to 60 units. The user can cycle through the test results obtained during each cycle of the brake pedal feel test by selecting "BACK" and "NEXT" on-screen prompts. It will be appreciated that the brake pedal feel test can comprise more than five metrics (M1-5), as illustrated in a seventeenth display screen 260 shown in Figure 6Q.

A sample set of metrics and the accompanying LSL and USL values is set out in Table A below. It will be appreciated that the specified values for the pedal travel, the hydraulic system pressure, the pedal load, the LSL and the USL are provided by way of example only. As such, these values are not to be construed as limiting on the scope of the present invention. Furthermore, these values can be calibrated for different applications, for example different vehicles.

**TABLE A**

| **Metric** | **Description** | **LSL** | **USL** |
|---|---|---|---|
| M1 | Pedal travel (mm) to achieve the first hydraulic system pressure (for example 15bar). | 20(mm) | 25(mm) |
| M2 | Pressure rise (bar) for brake pedal travel between the first brake pedal travel position (for example 20mm) and the second brake pedal travel position (for example 40mm). | 25(bar) | 30(bar) |
| M3 | Pedal travel (mm) to achieve an increase from the third hydraulic system pressure (for example 25bar) to the fourth hydraulic system pressure of (for example 45bar). | 15(mm) | 20(mm) |
| M4 | Pedal load (N) to achieve the fifth hydraulic system pressure (for example 15bar). | 20(N) | 25(N) |
| M5 | Pedal travel (mm) to achieve the sixth hydraulic system pressure (for example 10bar). | 5(mm) | 10(mm) |

Once the brake pedal feel test has been completed, the results are stored in system memory 17 and can be output to external memory for future reference. If the brake pedal feel test identifies any inconsistencies, appropriate remedial actions can be undertaken.

In order to prepare the vehicle for the brake pedal feel test, the test apparatus 1 is installed by fixedly mounting the pedal mounting bracket 29 to the brake pedal P and mounting the steering wheel mounting assembly 21 to the steering wheel W. The steering wheel mounting assembly 21 and the linear position transducer 23 should be arranged parallel to ensure that the linear position transducer 23 actuates linearly. The serial connector 5 is coupled to a diagnostic port on the vehicle to establish a communication channel between the CPU 15 and the vehicle communication network. The controller 3 is then activated and a start-up check performed to ensure that the test apparatus 1 is functioning correctly. This start-up check can optionally include interrogating the vehicle communication network to determine if the engine has been started and/or if the parking brake has been applied.

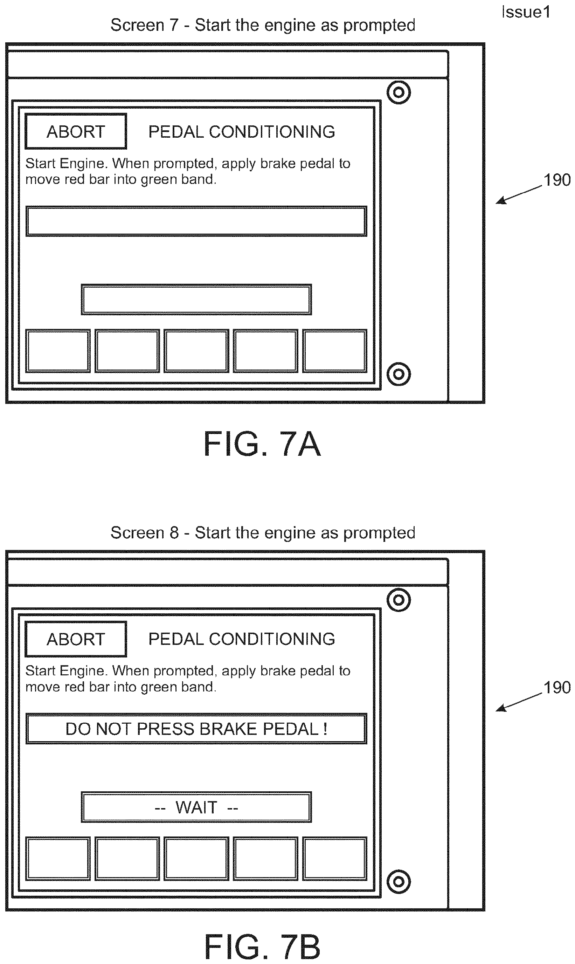

As described herein, the user then enters their name to create a test record for future reference. The barcode reader 11 is then used to scan a vehicle identification barcode to allow the controller 3 to determine the specification of the vehicle to be tested. Once these steps have been completed, the user can begin the test procedure as described herein. The performance of a brake pedal test will now be described, by way of example, with reference to the sample screens output to the display screen 9 shown Figures 7A-I.

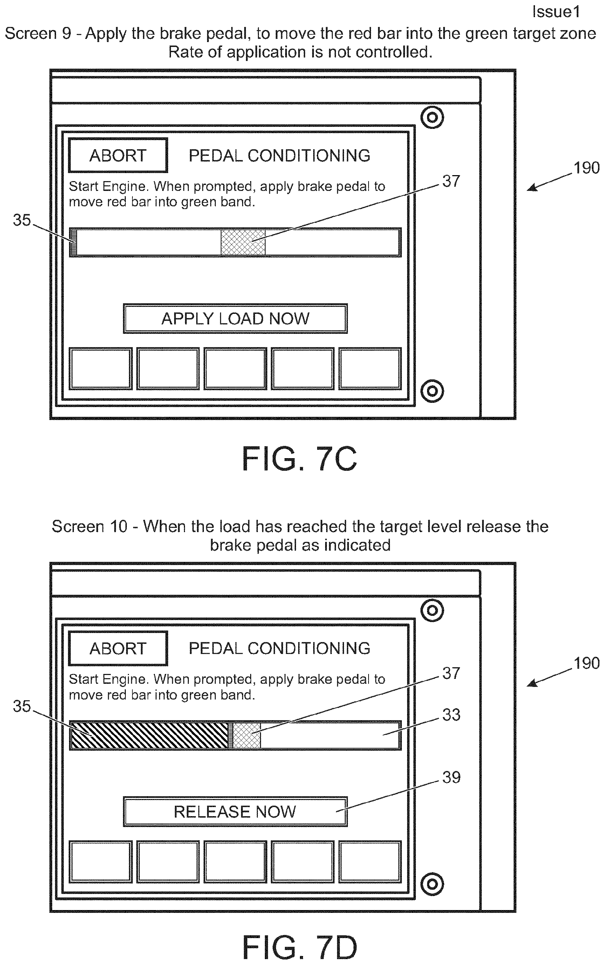

The user is provided with prompts on the display screen 9 on how to perform the brake conditioning test. A sample screen image of the tenth display image 190 is shown in Figure 7A and the user is instructed to start the vehicle engine. As shown in Figure 7B, a prompt is displayed instructing the user to wait until the system is ready to initiate the brake conditioning test. Sequential sample screen images of the tenth display image 190 taken during the brake conditioning test are shown in Figures 7C and 7B. As shown in Figure 7C, the brake conditioning test is initiated and the user is prompted to depress the brake pedal P to match the target brake load represented by the first indicator 35. As the brake pedal P is depressed, the load cell transducer 27 measures the actual load applied to the brake pedal P. In dependence on the measured load on the brake pedal P, the controller 3 controls the position of the second indicator 37 to provide visual feedback. The user depresses the pedal P until the second indicator 37 is positioned substantially coincident with the first indicator 35 such that the measured pedal load matches the target pedal load. When the measured load has reached the target load, the user is prompted to release the brake pedal P, as shown in Figure 7D.

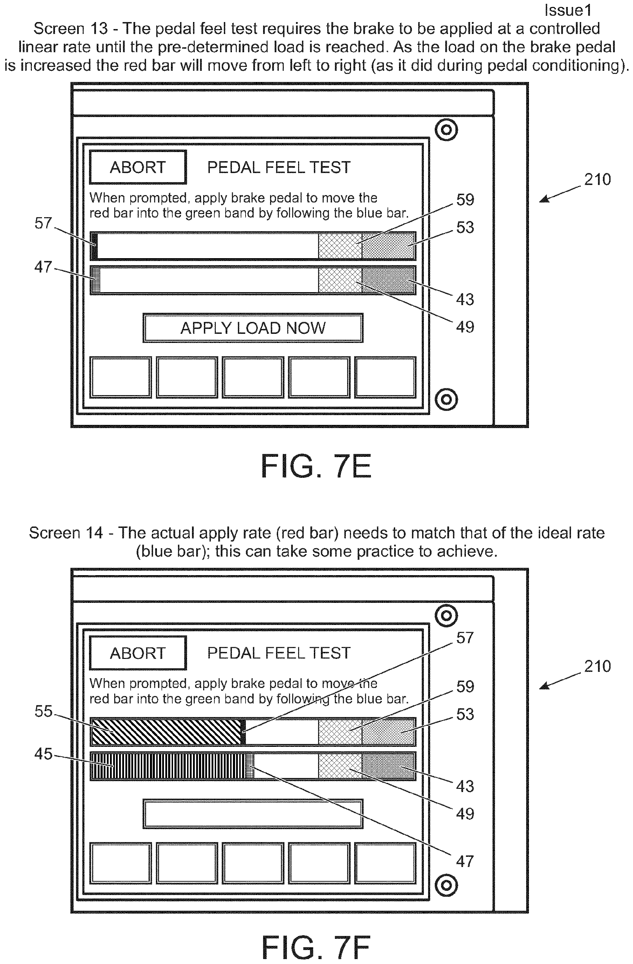

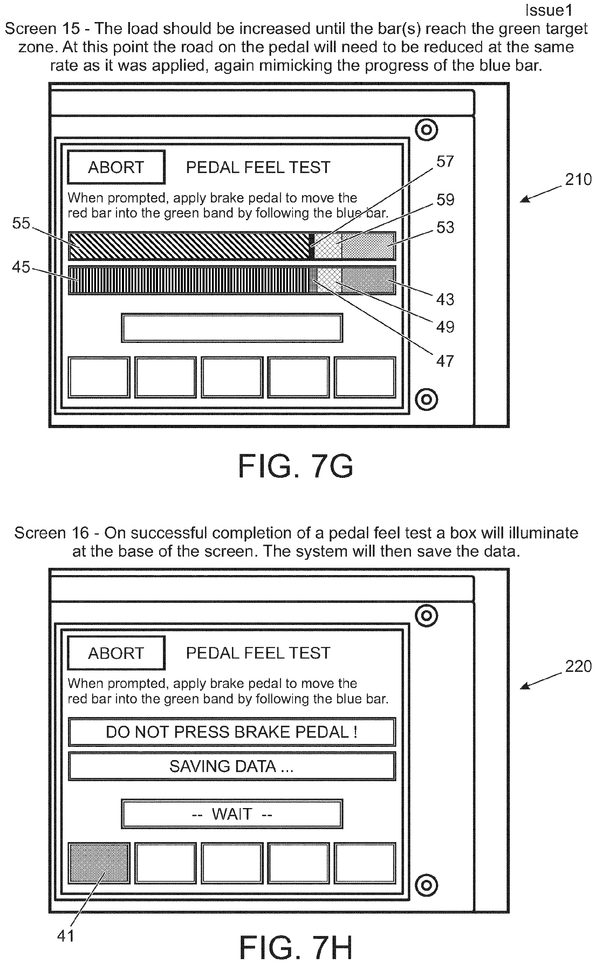

Once the brake conditioning test has been completed, the brake pedal feel test is initiated. Sequential sample screen images of the twelfth display image 210 taken during the brake conditioning test are shown in Figures 7E, 7F and 7G. The brake pedal feel test comprises a plurality of test cycles (five in the present implementation) which must be completed successfully in order to complete the brake pedal feel test. As shown in Figure 7E, the user is prompted to depress the brake pedal P to match the target brake load represented by the third indicator 45. The controller 3 controls the display screen 9 to extend the third indicator 45 at a uniform rate, thereby prompting the user to match the target brake load by depressing the brake pedal P. As the brake pedal P is depressed, the load cell transducer 27 measures the actual load applied to the brake pedal P and the controller 3 controls the position of the fourth indicator 55 to provide visual feedback to the user, as shown in Figure 7F. As shown in Figure 7G, once the measured brake load is equal to the maximum test load, the test for the increasing brake load (i.e. positive apply rate) is complete. The brake pedal test also comprises monitoring a decreasing brake load (i.e. negative apply rate) in which the brake load decreases from the maximum test load to zero. During this portion of the test cycle the third indicator 45 is retracted to represent a decreasing target brake load. The user matches the decreasing target brake load by controlling the release of the brake pedal P.

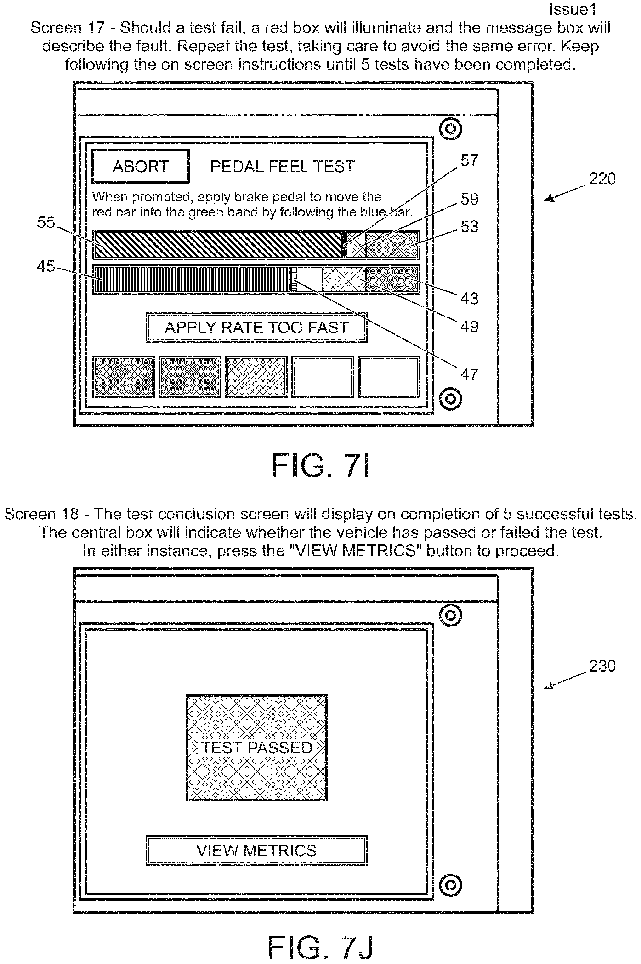

A test cycle is complete once the measured brake load has decreased to zero. The successful completion of the test cycle is then indicated on the display screen 9. The generated data is saved after successful completion of the test cycle. A sample screen image of the thirteenth display image 220 notifying the user that the test data is being saved is shown in Figure 7H. If a test cycle is not completed, the user is prompted and a message displayed identifying the fault. The test cycle should be repeated until the measured pedal load matches the target pedal load. A sample screen image of the thirteenth display image 220 notifying the user that the test has been unsuccessful as the apply rate was too fast is shown in Figure 7I. As described herein, the brake pedal feel test is completed only when five test cycles have been completed successfully, thereby ensuring that a range of data is available for analysis.

Throughout each test cycle, the position data generated by the linear position transducer 23 and the angular position transducer 25 is output to the controller 3 to enable the travel position (mm) of the brake pedal P to be monitored. Equally, the load cell transducer 27 measures the pedal force (N) applied to the brake pedal P and outputs the applied load data to the controller 3. The travel position data, the pedal load data and the hydraulic system pressure data are time-synched with each other to enable the metrics (M1-5) to be extracted from the recorded data sets. Once the brake pedal feel test has been completed, the metrics (M1-5) measured for each test cycle can be displayed in turn allowing the user to check that the pedal feel metrics fall within predefined parameters. The controller 3 can be configured to output an alert if one or more of the metrics (M1-5) are outside the predefined parameters. A sample screen image of the fourteenth display screen 230 confirming that the vehicle has passed the brake pedal feel test is shown in Figure 7J.

The test apparatus 1 has been described herein as comprising a load cell transducer 27 for measuring the load applied to the brake pedal P. In certain applications, the load cell transducer 27 could be omitted. The brake pedal travel derived from the position data generated by the linear position transducer 23 and the angular position transducer 25 would be used as a control parameter. Using this configuration, it is not possible to determine the fourth metric M4 described herein (which measures the applied pedal force (N) required to achieve a fifth hydraulic system pressure). However, it will be appreciated that the test apparatus 1 can be simplified.

In this modified arrangement, the second set of graphical prompts corresponding to the arrangement described herein is used to guide the user through the brake pedal feel test albeit modified to relate to pedal travel (mm) rather than pedal load (N). The third linear element 43 and the third indicator 45 are again used to represent the target pedal travel. The third indicator 45 is in the form of a guide bar which extends relative to the third linear element 43 to represent a target pedal travel to be matched by the user. The first end 47 of the third indicator 45 represents the target pedal travel to be matched by the user operating the brake pedal P. The third indicator 45 extends at a uniform rate which corresponds to a constant pedal apply rate (mm/s) which can be either positive or negative. The third indicator 45 is positioned initially to represent a pedal travel of 5mm and then extends once the measured pedal travel applied by the user exceeds this position. In the present embodiment, the third indicator 45 extends at a rate equivalent to an increase in the pedal travel of 15mm/s and then returns to zero at the same rate. The operation of the test apparatus 1 is otherwise unchanged in this arrangement.

It will be appreciated that various changes and modifications can be made without departing from the scope of the present application. For example, the test apparatus 1 has been described with reference to a brake pedal P, but the test apparatus 1 could be used to test the feel of a clutch pedal or an accelerator pedal. Furthermore, although the brake pedal feel test has been described as comprising five test cycles, it will be appreciated that less than five test cycles or more than five test cycles can be performed.

## Claims

1. A method of testing behaviour of a vehicle brake system in dependence on operation of a brake pedal coupled to a hydraulic system, the method comprising:
identifying the vehicle to be tested;
retrieving one or more predefined metrics for the identified vehicle;
displaying a first graphical indicator (35) on a display screen (9) to indicate a target brake pedal travel or a target brake pedal load;
displaying a second graphical indicator (37) on the display screen to represent a measured brake pedal travel or a measured brake pedal load,
displacing the brake pedal at least substantially to match the measured brake pedal travel to the target brake pedal travel or to match the measured brake pedal load to the target brake pedal load;
wherein a hydraulic system pressure is monitored as the brake pedal is displaced to determine if the vehicle brake system satisfies said retrieved one or more predefined metrics.

2. A method as claimed in claim 1, wherein the method comprises interrogating a vehicle communication network to determine the hydraulic system pressure.

3. A method as claimed in claim 1 or claim 2, wherein the brake pedal travel is measured by a position transducer (23) coupled to the brake pedal; and/or the brake pedal load is measured by a load cell transducer (27) coupled to the brake pedal.

4. A method as claimed in any one of claims 1, 2 or 3, wherein said one or more predefined metrics include one or more of the following:
the measured travel of the brake pedal corresponding to a first hydraulic system pressure;
an increase in the hydraulic system pressure corresponding to the measured travel of the brake pedal between a first pedal position and a second pedal position;
the measured pedal travel corresponding to an increase from a third hydraulic system pressure to a fourth hydraulic system pressure;
the measured pedal force corresponding to a fifth hydraulic system pressure; and
the measured pedal travel corresponding to a sixth hydraulic system pressure.

5. A method as claimed in any one of claims 1 to 4, wherein the target brake pedal travel or the target brake pedal load displayed on the display screen increases with respect to time.

6. A method as claimed in claim 5, wherein the target brake pedal travel or the target brake pedal load increase at a uniform rate.

7. A method as claimed in any one of claims 1 to 6 comprising identifying the vehicle to be tested.

8. A test apparatus (1) for testing behaviour of a vehicle brake system in dependence on operation of a brake pedal, the test apparatus comprising:
a processor (15) configured to:
identify the vehicle to be tested;
retrieve one or more predefined metrics for the identified vehicle;
receive position data from at least one position transducer (23) to determine a brake pedal travel or receive pedal load data from at least one load cell transducer (27) to determine a brake pedal load;
output a first signal to a display screen (9) to display a first graphical indicator (35) representing a target brake pedal travel or a target brake pedal load;
output a second signal to the display screen to display a second graphical indicator (37) representing the determined brake pedal travel or the determined brake pedal load;
receive hydraulic system pressure data from a hydraulic pressure sensor and, based on the received hydraulic system pressure data, determine if the vehicle brake system satisfies said retrieved one or more predefined metrics.

9. A test apparatus as claimed in claim 8 comprising means for coupling the processor to a vehicle communication network.

10. A test apparatus as claimed in claim 9, wherein the processor is configured to receive the hydraulic system pressure data from the vehicle communication network.

11. A test apparatus as claimed in any one of claims 8, 9 or 10, wherein said one or more metrics include one or more of the following:
the measured travel of the brake pedal corresponding to a first hydraulic system pressure;
an increase in the hydraulic system pressure corresponding to the measured travel of the brake pedal between a first pedal position and a second pedal position;
the measured pedal travel corresponding to an increase from a third hydraulic system pressure to a fourth hydraulic system pressure;
the measured pedal force corresponding to a fifth hydraulic system pressure; and
the measured pedal travel corresponding to a sixth hydraulic system pressure.

12. A test apparatus as claimed in any one of claims 8 to 11, wherein the processor is configured to control the display of the target brake pedal load on the display screen to increase with respect to time.

13. A test apparatus as claimed in claim 12, wherein the processor is configured to increase the target brake pedal load at a uniform rate.

14. A test apparatus as claimed in any one of claims 8 to 13 comprising means for identifying the vehicle to be tested.

## Patentansprüche

1. Verfahren zum Prüfen des Verhaltens eines Fahrzeugbremssystems abhängig von dem Betrieb eines mit einer Hydraulikanlage gekoppelten Bremspedals, wobei das Verfahren Folgendes umfasst:
Identifizieren des zu überprüfenden Fahrzeugs;
Abrufen einer oder mehrerer vorgegebener Metriken für das identifizierte Fahrzeug;
Anzeigen eines ersten graphischen Indikators (35) auf einem Bildschirm (9), um einen Zielbremspedalweg oder eine Zielbremspedalbelastung anzuzeigen;
Anzeigen eines zweiten graphischen Indikators (37) auf dem Bildschirm, um einen gemessenen Bremspedalweg oder eine gemessene Bremspedalbelastung darzustellen,
Verlagern des Bremspedals wenigstens im Wesentlichen, um den gemessenen Bremspedalweg an den Zielbremspedalweg anzupassen oder die gemessene Bremspedalbelastung an die Zielbremspedalbelastung anzupassen;
wobei ein Hydraulikanlagendruck überwacht wird, während das Bremspedal verlagert wird, um zu bestimmen, ob das Fahrzeugbremssystem die eine abgerufene oder die mehreren abgerufenen vorgegebenen Metriken erfüllt.

2. Verfahren nach Anspruch 1, wobei das Verfahren das Abfragen eines Fahrzeugkommunikationsnetzwerks umfasst, um den Hydraulikanlagendruck zu bestimmen.

3. Verfahren nach Anspruch 1 oder 2, wobei der Bremspedalweg durch ein mit dem Bremspedal gekoppeltes Wegmesssystem (23) gemessen wird; und/oder die Bremspedalbelastung durch einen mit dem Bremspedal gekoppelten Lastzellmesswandler (27) gemessen wird.

4. Verfahren nach einem der Ansprüche 1, 2 oder 3, wobei die eine oder die mehreren vorgegebenen Metriken eines oder mehrere der Folgenden enthalten:
den gemessenen Weg des Bremspedals, der einem ersten Hydraulikanlagendruck entspricht;
eine Erhöhung des Hydraulikanlagendrucks, der dem gemessenen Weg des Bremspedals zwischen einer ersten Pedalposition und einer zweiten Pedalposition entspricht;
den gemessenen Pedalweg, der einer Erhöhung von einem dritten Hydraulikanlagendruck auf einen vierten Hydraulikanlagendruck entspricht;
die gemessene Pedalkraft, die einem fünften Hydraulikanlagendruck entspricht; und
den gemessenen Pedalweg, der einem sechsten Hydraulikanlagendruck entspricht.

5. Verfahren nach einem der Ansprüche 1 bis 4, wobei der Zielbremspedalweg oder die Zielbremspedalbelastung, der/die auf dem Bildschirm angezeigt wird, im Laufe der Zeit zunimmt.

6. Verfahren nach Anspruch 5, wobei sich der Zielbremspedalweg oder die Zielbremspedalbelastung gleichmäßig erhöhen.

7. Verfahren nach einem der Ansprüche 1 bis 6, umfassend das Identifizieren des zu überprüfenden Fahrzeugs.

8. Prüfeinrichtung (1) zum Prüfen des Verhaltens eines Fahrzeugbremssystems abhängig von dem Betrieb eines Bremspedals, wobei die Prüfeinrichtung Folgendes umfasst:
einen Prozessor (15), der konfiguriert ist zum:
Identifizieren des zu überprüfenden Fahrzeugs;
Abrufen einer oder mehrerer vorgegebener Metriken für das identifizierte Fahrzeug;
Empfangen von Positionsdaten von wenigstens einem Wegmesssystem (23), um einen Bremspedalweg zu bestimmen, oder Empfangen von Pedalbelastungsdaten von wenigstens einem Lastzellmesswandler (27), um eine Bremspedalbelastung zu bestimmen;
Ausgeben eines ersten Signals an einen Bildschirm (9), um einen ersten graphischen Indikator (35) anzuzeigen, der einen Zielbremspedalweg oder eine Zielbremspedalbelastung darstellt;
Ausgeben eines zweiten Signals an den Bildschirm, um einen zweiten graphischen Indikator (37) anzuzeigen, der den bestimmten Bremspedalweg oder die bestimmte Bremspedalbelastung darstellt;
Empfangen von Hydraulikanlagendruckdaten von einem Hydraulikdrucksensor und, auf der Grundlage der empfangenen Hydraulikanlagendruckdaten, Bestimmen, ob das Fahrzeugbremssystem die abgerufene oder die abgerufenen mehreren vorgegebenen Metriken erfüllt.

9. Prüfeinrichtung nach Anspruch 8, umfassend Mittel zum Koppeln des Prozessors an ein Fahrzeugkommunikationsnetzwerk.

10. Prüfeinrichtung nach Anspruch 9, wobei der Prozessor konfiguriert ist, die Hydraulikanlagendruckdaten von dem Fahrzeugkommunikationsnetzwerk zu empfangen.

11. Prüfeinrichtung nach einem der Ansprüche 8, 9 oder 10, wobei die eine oder die mehreren Metriken eines oder mehrere der Folgenden enthalten:
den gemessenen Weg des Bremspedals, der einem ersten Hydraulikanlagendruck entspricht;
eine Erhöhung des Hydraulikanlagendrucks, der dem gemessenen Weg des Bremspedals zwischen einer ersten Pedalposition und einer zweiten Pedalposition entspricht;
den gemessenen Pedalweg, der einer Erhöhung von einem dritten Hydraulikanlagendruck auf einen vierten Hydraulikanlagendruck entspricht;
die gemessene Pedalkraft, die einem fünften Hydraulikanlagendruck entspricht; und
den gemessenen Pedalweg, der einem sechsten Hydraulikanlagendruck entspricht.

12. Prüfeinrichtung nach einem der Ansprüche 8 bis 11, wobei der Prozessor konfiguriert ist, die Anzeige der Zielbremspedalbelastung auf dem Bildschirm zum Erhöhen im Laufe der Zeit zu steuern.

13. Prüfeinrichtung nach Anspruch 12, wobei der Prozessor konfiguriert ist, die Zielbremspedalbelastung gleichmäßig zu erhöhen.

14. Prüfeinrichtung nach einem der Ansprüche 8 bis 13, Mittel zum Identifizieren des zu überprüfenden Fahrzeugs umfassend.

## Revendications

1. Procédé d'évaluation de comportement d'un système de frein de véhicule selon un fonctionnement d'une pédale de frein couplée à un système hydraulique, le procédé comprenant :
l'identification du véhicule à évaluer ;
la récupération d'une ou de plusieurs métriques prédéfinies pour le véhicule identifié ;
l'affichage d'un premier indicateur graphique (35) sur un écran d'affichage (9) pour indiquer une course de pédale de frein cible ou une charge de pédale de frein cible ;
l'affichage d'un second indicateur graphique (37) sur l'écran d'affichage pour représenter une course de pédale de frein mesurée ou une charge de pédale de frein mesurée,
le déplacement de la pédale de frein pour faire concorder au moins sensiblement la course de pédale de frein mesurée à la course de pédale de frein cible ou pour faire concorder la charge de pédale de frein mesurée à la charge de pédale de frein cible ;
dans lequel une pression de système hydraulique est surveillée à mesure que la pédale de frein est déplacée pour déterminer si le système de frein de véhicule satisfait lesdites une ou plusieurs métriques prédéfinies récupérées.

2. Procédé selon la revendication 1, dans lequel le procédé comprend l'interrogation d'un réseau de communication de véhicule pour déterminer la pression de système hydraulique.

3. Procédé selon la revendication 1 ou la revendication 2, dans lequel la course de pédale de frein est mesurée par un transducteur de position (23) couplé à la pédale de frein ; et/ou la charge de pédale de frein est mesurée par un transducteur de cellule de charge (27) couplé à la pédale de frein.

4. Procédé selon l'une quelconque des revendications 1, 2 ou 3, dans lequel lesdites une ou plusieurs métriques prédéfinies comportent un ou plusieurs des éléments suivants :
la course mesurée de la pédale de frein correspondant à une première pression de système hydraulique ;
une augmentation de la pression de système hydraulique correspondant à la course mesurée de la pédale de frein entre une première position de pédale et une seconde position de pédale ;
la course de pédale mesurée correspondant à une augmentation d'une troisième pression de système hydraulique à une quatrième pression de système hydraulique ;
la force de pédale mesurée correspondant à une cinquième pression de système hydraulique ; et
la course de pédale mesurée correspondant à une sixième pression de système hydraulique.

5. Procédé selon l'une quelconque des revendications 1 à 4, dans lequel la course de pédale de frein cible ou la charge de pédale de frein cible affichée sur l'écran d'affichage augmente dans le temps.

6. Procédé selon la revendication 5, dans lequel la course de pédale de frein cible ou la charge de pédale de frein cible augmente à un taux uniforme.

7. Procédé selon l'une quelconque des revendications 1 à 6, comprenant l'identification du véhicule à évaluer.

8. Appareil d'évaluation (1) pour évaluer le comportement d'un système de frein de véhicule selon un fonctionnement d'une pédale de frein, l'appareil d'évaluation comprenant :
un processeur (15) configuré pour :
identifier le véhicule à évaluer ;
récupérer une ou plusieurs métriques prédéfinies pour le véhicule identifié ;
recevoir des données de position en provenance d'au moins un transducteur de position (23) pour déterminer une course de pédale de frein ou recevoir des données de charge de pédale en provenance d'au moins un transducteur de cellule de charge (27) pour déterminer une charge de pédale de frein ;
fournir en sortie un premier signal à un écran d'affichage (9) pour afficher un premier indicateur graphique (35) représentant une course de pédale de frein cible ou une charge de pédale de frein cible ;
fournir en sortie un second signal à l'écran d'affichage pour afficher un second indicateur graphique (37) représentant la course de pédale de frein déterminée ou la charge de pédale de frein déterminée ;
recevoir des données de pression de système hydraulique en provenance d'un capteur de pression hydraulique et, d'après les données de pression de système hydraulique reçues, déterminer si le système de frein de véhicule satisfait lesdites une ou plusieurs métriques prédéfinies récupérées.

9. Appareil d'évaluation selon la revendication 8, comprenant un moyen de couplage du processeur à un réseau de communication de véhicule.

10. Appareil d'évaluation selon la revendication 9, dans lequel le processeur est configuré pour recevoir les données de pression de système hydraulique en provenance du réseau de communication de véhicule.

11. Appareil d'évaluation selon l'une quelconque des revendications 8, 9 ou 10, dans lequel lesdites une ou plusieurs métriques comportent un ou plusieurs des éléments suivants :
la course mesurée de la pédale de frein correspondant à une première pression de système hydraulique ;
une augmentation de la pression de système hydraulique correspondant à la course mesurée de la pédale de frein entre une première position de pédale et une seconde position de pédale ;
la course de pédale mesurée correspondant à une augmentation d'une troisième pression de système hydraulique à une quatrième pression de système hydraulique ;
la force de pédale mesurée correspondant à une cinquième pression de système hydraulique ; et
la course de pédale mesurée correspondant à une sixième pression de système hydraulique.

12. Appareil d'évaluation selon l'une quelconque des revendications 8 à 11, dans lequel le processeur est configuré pour commander l'affichage de la charge de pédale de frein cible sur l'écran d'affichage pour une augmentation dans le temps.

13. Appareil d'évaluation selon la revendication 12, dans lequel le processeur est configuré pour augmenter la charge de pédale de frein cible à un taux uniforme.

14. Appareil d'évaluation selon l'une quelconque des revendications 8 à 13, comprenant un moyen d'identification du véhicule à évaluer.
